# EUROPEAN PATENT APPLICATION

(11) **EP 4 641 898 A1**
(43) Date of publication of application: **29.10.2025**
(21) Application number: 24172487.1
(22) Date of filing: 25.04.2024
(51) Int. Cl.: H02M 1/00, H02M 3/335, H02M 7/06, H02M 3/00, H05B 45/382

(54) **RESONANT HYBRID FLYBACK CONVERTER, AND DRIVER COMPRISING THE SAME**

(71) Applicant: Tridonic GmbH & Co KG, 6850 Dornbirn (AT)
(72) Inventor: Egle, Manuel, 6851 Dornbirn (AT)
(74) Representative: Rupp, Christian

(57) **Abstract**

Disclosed is a resonant hybrid flyback converter (1). The converter comprises an input capacitor (102) and an output capacitor (111); a high-side, HS, switch (104, *Q₁*) and a low-side, LS, switch (105, *Q₂)*; a transformer, comprising a primary winding (106, *Lᵣ;* 108, *Lₘ*) and a secondary winding (109); and a rectifying circuit (110, D). The input capacitor (102), the HS switch (104, *Q₁*) and the LS switch (105, *Q₂*) form a first circuit loop, the LS switch (105, *Q₂),* the primary winding (106, *Lᵣ;* 108, *Lₘ*) and the resonant capacitor (107, *Cᵣ)* form a second circuit loop; and the rectifying circuit (110, D), the secondary winding (109) and the output capacitor (111) form a third circuit loop. The converter (1) further comprises a first sensing circuit, configured to sense a primary current (304, *I_{HB}*) through the primary winding (106, *Lᵣ;* 108, *Lₘ*) and the resonant capacitor (107, *Cᵣ);* a second sensing circuit, configured to sense a secondary current (307, *I_{SEC}*) through the rectifying circuit (110, D) and the secondary winding (109); and a control circuit (103). The control circuit (103) is configured to determine a positive peak value (305, *I_{MAGpos}*) for the primary current (304, *I_{HB}*) in accordance with a closed-loop control of an average of the secondary current (307, *I_{SEC}*) and a setpoint value *(Is_{ECYef}*) for said average; determine a negative peak value (306, *I_{MAGneg})* for the primary current (304, *I_{HB}*) in accordance with a current-limited and voltage-limited commutation of the switches (104, *Q₁;* 105, *Q₂);* derive a blanking signal (308) that temporally covers a non-zero secondary current (307, *I_{SEC}*) period; and drive the switches (104, *Q₁;* 105, *Q₂*) in turns in accordance with a dead time (*t_{dead}*) for the commutation of the switches (104, *Q₁;* 105, *Q₂),* and a hysteretic control of the primary current (304, *I_{HB}*) between the positive peak value (305, *I_{MAGPOS}*) and the negative peak value (306, *I_{MAGneg}*). The hysteretic control is inhibited by the blanking signal (308). The use of the blanking signal enables a hysteretic control of resonant hybrid flyback converters irrespective of the particular load condition.

## Description

### Technical Field

The present disclosure relates generally to the field of lighting technology, and in particular to a resonant hybrid flyback converter under hysteretic control.

### Background Art

Resonant hybrid flyback (or asymmetric duty-cycle flyback) converters may refer to a combination of a flyback converter (wherein a square-wave voltage is applied to a primary-side inductance of a transformer) and a resonant converter (wherein the square-wave voltage is applied to a resonant tank circuit), wherein the resonant tank circuit includes the primary-side inductance.

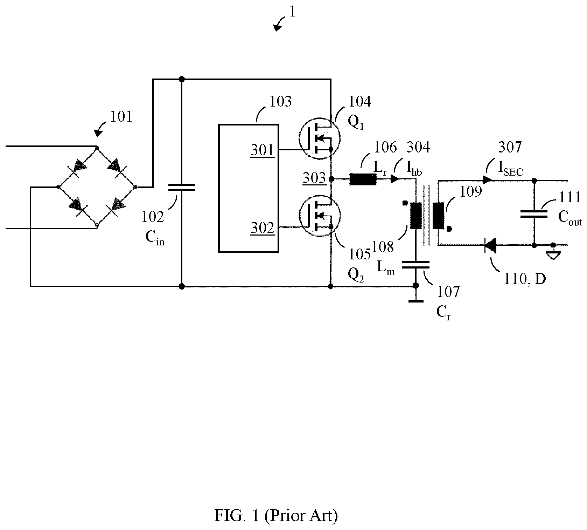

Such converters typically comprise a high-side switch and a low-side switch arranged in series (see FIG. 1) and driven (i.e., being conductive) alternatingly so as to induce an oscillation-based power transfer via a resonant tank circuit and a galvanic separation.

Typically, an on-time of the high-side switch is based on the magnetizing current of the transformer (peak current control), and an on-time of the low-side switch is kept fixed.

The issue with the latter is that a half-bridge current not only includes the magnetizing current but also a reflected secondary (output) current which would trigger the turn-off of the low-side switch early.

In order to achieve a large output window, the on-time of low-side switch may be dynamically adapted to the current operating point (based on the output voltage), but this can be too slow for fast transients and it would be advantageous to control the low-side switch also based on the magnetizing current of the transformer and to have a hysteretic control.

### Summary

It is an object to overcome the above-mentioned and other drawbacks.

The foregoing and other objects are achieved by the features of the independent claims. Further implementation forms are apparent from the dependent claims, the description and the figures.

According to a first aspect, a resonant hybrid flyback converter is provided. The converter comprises an input capacitor and an output capacitor; a high-side, HS, switch and a low-side, LS, switch; a transformer, comprising a primary winding and a secondary winding; and a rectifying circuit. The input capacitor, the HS switch and the LS switch form a first circuit loop, the LS switch, the primary winding and the resonant capacitor form a second circuit loop; and the rectifying circuit, the secondary winding and the output capacitor form a third circuit loop. The converter further comprises a first sensing circuit, configured to sense a primary current through the primary winding and the resonant capacitor; a second sensing circuit, configured to sense a secondary current through the rectifying circuit and the secondary winding; and a control circuit. The control circuit is configured to determine a positive peak value for the primary current in accordance with a closed-loop control of an average of the secondary current and a setpoint value for said average; determine a negative peak value for the primary current in accordance with a current-limited and voltage-limited commutation of the switches; derive a blanking signal that temporally covers a non-zero secondary current period; and drive the switches in turns in accordance with a dead time for the commutation of the switches, and a hysteretic control of the primary current between the positive peak value and the negative peak value. The hysteretic control is inhibited by the blanking signal.

The first sensing circuit may comprise a first ohmic resistor interposed in the second circuit loop and may be configured to provide a voltage being indicative of the primary current through the primary winding and the resonant capacitor.

The second sensing circuit may comprise a current transformer, a second ohmic resistor and a diode. A primary winding of the current transformer may be interposed in the third circuit loop; a secondary winding of the current transformer, the second ohmic resistor and the diode may form a fourth circuit loop; and a voltage across the second ohmic resistor may be indicative of an instantaneous value of the secondary current.

The second sensing circuit may further comprise a first-order resistor-capacitor, RC, filter; and a voltage across the capacitor of the RC filter may be indicative of the average of the secondary current.

The control circuit may further comprise an op-amp comparator, configured to derive the blanking signal in accordance with the voltage across the second ohmic resistor applicable at a non-inverting input of the comparator and a given threshold voltage applicable at an inverting input of the comparator.

The control circuit may further be configured to derive the blanking signal analytically in accordance with a resonant frequency of the resonant capacitor and of a leakage inductance of the primary winding.

The blanking signal may further cover a given lead time of the non-zero secondary current period.

The blanking signal may further cover a given follow-up time of the non-zero secondary current period.

The non-zero secondary current may comprise a positive current flow towards a load of the converter.

According to a second aspect, a driver for at least one LED is provided. The driver comprises a resonant hybrid flyback converter of the first aspect.

The driver may further comprise a power factor correction, PFC, circuit configured to perform AC/DC conversion and PFC.

### Advantageous Effects

The use of a blanking signal enables a hysteretic control of resonant hybrid flyback converters irrespective of the particular load condition.

### Brief Description of Drawings

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.
- FIG. 1: illustrates a circuit topology of a resonant hybrid flyback converter in accordance with prior art;
- FIG. 2: illustrates a state chart of a control strategy of the converter of FIG. 1 in accordance with prior art;
- FIG. 3: illustrates typical waveforms of the converter of FIG. 1 in accordance with prior art;
- FIG. 4: illustrates a state chart of a control strategy of the converter in accordance with the present disclosure;
- FIGs. 5 - 6: illustrate typical waveforms of the converter in accordance with the present disclosure;
- FIG. 7: illustrates an exemplary LED driver including a resonant hybrid flyback converter in accordance with the present disclosure;
- FIG. 8: illustrates a circuit topology of the resonant hybrid flyback converter in accordance with the present disclosure; and
- FIGs. 9-11: illustrate typical waveforms of the converter in accordance with the present disclosure at different at different operating points.

### Detailed Descriptions of Drawings

In the following description, reference is made to the accompanying drawings, which form part of the disclosure, and which show, by way of illustration, specific aspects of implementations of the present disclosure or specific aspects in which implementations of the present disclosure may be used. It is understood that implementations of the present disclosure may be used in other aspects and comprise structural or logical changes not depicted in the figures. The following detailed description, therefore, is not to be taken in a limiting sense, and the scope of the present disclosure is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary implementations and/or aspects described herein may be combined with each other, unless specifically noted otherwise.

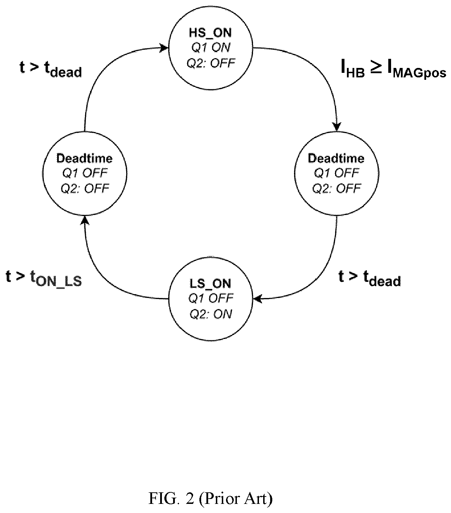

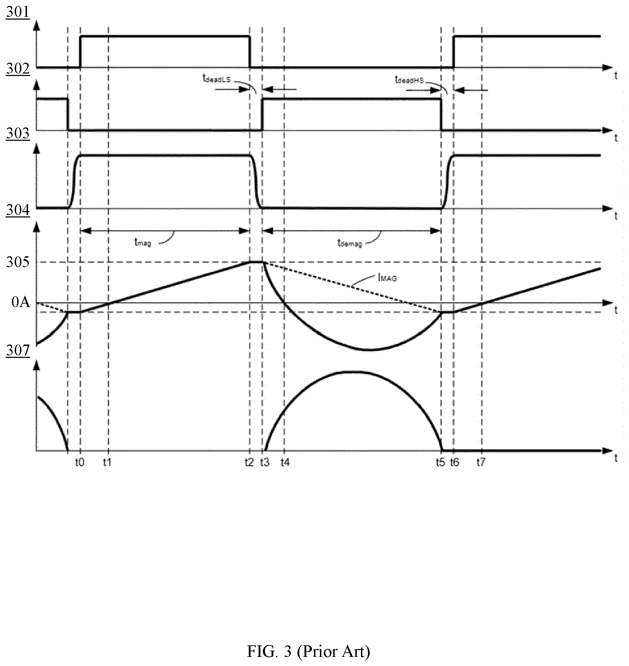

FIG. 1 illustrates a circuit topology of a resonant hybrid flyback converter *1* in accordance with prior art, FIG. 2 illustrates a state chart of a control strategy of the converter of FIG. 1, and FIG. 3 illustrates typical waveforms of the converter of FIG. 1.

The converter *1* may particularly form part of an LED driver (not shown) for at least one LED.

The converter *1* comprises an input rectifying circuit *101* such as the depicted full-wave rectifier, an input capacitor *102, Cᵢₙ*, a high-side (HS) switch *104, Q₁* and a low-side (LS) switch *105, Q₂* forming a first circuit loop.

The HS switch *104, Q₁* and the LS switch *105, Q₂* may respectively comprise a transistor, in particular MOSFETs.

It will be appreciated that the HS switch *104, Q₁* and the LS switch *105, Q₂* constitute a half-bridge similar to an LLC converter.

The converter *1* further comprises a transformer *106, 108, 109*, comprising a primary winding *106, Lᵣ; 108, Lₘ* and a secondary winding *109*; and a resonant capacitor *107, Cᵣ.* The resonant inductor *106, Lᵣ* represents a series inductance being either a leakage inductance of the transformer *106, 108, 109*or the leakage inductance plus an external inductor.

The LS switch *105, Q₂*, the primary winding *106, Lᵣ; 108, Lₘ* and the resonant capacitor *107, Cᵣ* form a second circuit loop.

A major difference with respect to a flyback topology is the resonant capacitor *107, Cᵣ* in series with the primary winding *106, Lᵣ; 108, Lₘ* of the transformer *106, 108, 109.*

The converter *1* further comprises a rectifying circuit *110, D* such as a diode *D,* and an output capacitor *111*, *Cₒᵤₜ.*

The rectifying circuit *110, D,* the secondary winding *109* and the output capacitor *111, Cₒᵤₜ* form a third circuit loop.

The converter *1* further comprises a first sensing circuit (not shown), configured to sense a primary current *304, I_{HB}* through the primary winding *106, Lᵣ; 108, Lₘ* and the resonant capacitor *107, Cᵣ.*

The first sensing circuit may, for instance, comprise a first ohmic resistor interposed in the second circuit loop and may be configured to provide a voltage being indicative of the primary current *304, I_{HB}* through the primary winding *106, Lᵣ; 108, Lₘ* and the resonant capacitor *107, Cᵣ.*

The converter *1* further comprises a second sensing circuit (not shown), configured to sense a secondary current *307, I_{SEC}* through the rectifying circuit *110, D* and the secondary winding *109.*

The converter *1* further comprises a control circuit *103,* such as an application-specific integrated circuit (ASIC), a microcontroller, or the like.

According to prior art, the control circuit *103* is typically configured to determine a positive peak value *305, I_{MAGpos}* for the primary current *304, I_{HB}* (i.e., a variable on-time *t_{ON_HS}* / *t_{mag}* for the HS switch *104, Q₁*) in accordance with a closed-loop control of an average of the secondary current *307, I_{SEC}* and a setpoint value *I_{SECref}* for said average; and to determine a fixed on-time (*t_{LS_ON} in* *FIG. 2*, *t_{demag}* in FIG. 3) for the LS switch 105, *Q₂.*

The control circuit *103* is further configured to drive the switches *104, Q₁; 105, Q₂* in turns (using drive/control signals *301, 302*) in accordance with a dead time *t_{dead}* for the commutation of the switches *104, Q₁; 105*, *Q₂*, a peak control of the primary current *304, I_{HB}* in accordance with the positive peak value *305, I_{MAGpos}* and a fixed on-time control of the LS switch 105, *Q₂.*

So the HS switch *104, Q₁* is turned on at the beginning of the switching cycle and turned off once the primary current *304, I_{HB}* reaches the positive peak value *305, I_{MAGpos}* set by the output current regulator. A voltage 303, *V_{HB}* at a common terminal of the switches 104, 105 is raised to a level of a DC input voltage.

Note that at the turn-off point *t₂* (see FIG. 3) of the HS switch *104, Q₁*, the primary current *304, I_{HB}* corresponds to the magnetizing current *I_{MAG}.*

After a short dead time (*t_{dead}* in FIG. 2, *t_{deadLS}* in FIG. 3) the LS switch 105, *Q₂* is turned on for the fixed on-time (*to_{N_LS}* in FIG. 2, *t_{demag}* in FIG. 3)

This on-time *t_{ON_LS}*, *t_{demag}* has to be chosen carefully to make sure that the primary current *304, I_{HB}* at the turn-off point *t₅* (see FIG. 3) is big (negative) enough to achieve zero-voltage switching (ZVS) in the half-bridge, but not too big to avoid saturation and excessive losses of the transformer *106, 108, 109* and switches *104, 105.*

It is also important that *I_{SEC}* = 0 at this time to achieve zero-current switching (ZCS) of the rectifying circuit *110, D.*

The issue here is that the primary current *304, I_{HB}* not only includes the magnetizing current *I_{MAG}*, but also the reflected secondary (output) current *307, I_{SEC}* which would trigger the turn-off of the LS switch 105, *Q₂* early.

In order to achieve a large output window, the on-time *t_{demag}* of the LS switch 105, *Q₂* may be adapted dynamically to the respective operating point (based on the output voltage), but this can be too slow for fast transients and it would be advantageous to control also the LS switch 105, *Q₂* based on the magnetizing current *I_{MAG}* of the transformer so as to have a hysteretic control.

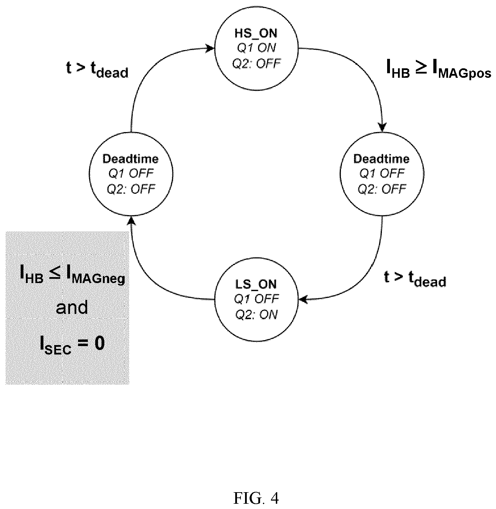

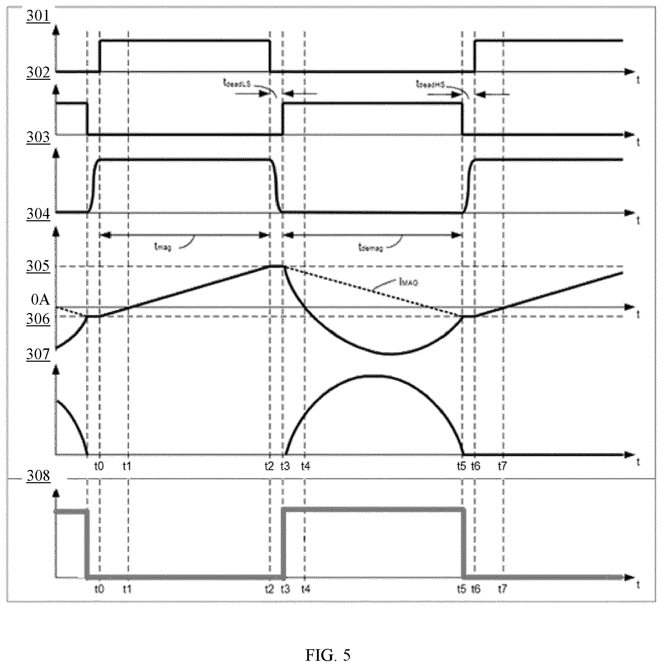

FIG. 4 illustrates a state chart of a control strategy of the converter *1* in accordance with the present disclosure, and FIGs. 5 - 6 illustrate typical waveforms of the converter *1* in accordance with the present disclosure.

According to the updated state machine, the on-time *t_{ON_LS}* / *t_{demag}* of the LS switch 105, *Q₂* is controlled by a negative peak value *306, I_{MAGneg}* for the primary current *304, I_{HB}* on the condition that the rectifying circuit *110, D* is not conducting, indicated as *I_{SEC}* = 0.

As such, the control circuit *103* is further configured to determine a negative peak value *306, I_{MAGneg}* (see FIG. 5) for the primary current *304, I_{HB}* in accordance with a current-limited and voltage-limited commutation of the switches *104, Q₁; 105, Q₂*, and the control circuit *103* is further configured to derive a blanking signal *308* that temporally covers a non-zero secondary current *307, I_{SEC}* period.

Current-limited and voltage-limited commutation may mean that the negative peak value *306, I_{MAGneg}* for the primary current *304, I_{HB}* is set as close to 0A as possible to minimize the primary current *304, I_{HB}* and the resulting power loss, and is nevertheless set high enough (off 0A) to ensure zero-voltage switching (ZVS) of the switches *104*, *Q₁; 105*, *Q₂.*

In particular, the non-zero secondary current *307, I_{SEC}* may comprise a positive current flow towards a load (such as at least one LED) of the converter *1*.

According to FIG. 5, the blanking signal *308* is on a logic 'high' (i.e., blanking, inhibition) level during non-zero secondary current *307, I_{SEC}* periods.

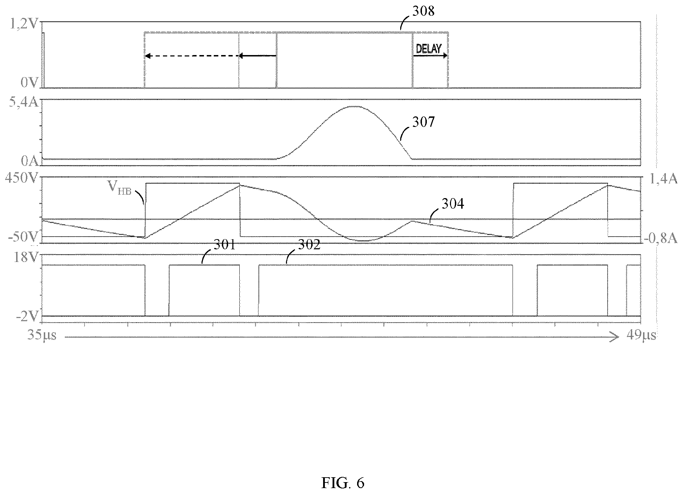

As shown in the example of FIG. 6, a lower secondary current *307, I_{SEC}* may not flow immediately when the LS switch 105, *Q₂* is turned on.

Accordingly, the blanking signal *308* may further cover a given lead time of the non-zero secondary current *307, I_{SEC}* period. In other words, in order to make the system more robust the blanking could already start when/before the LS switch 105, *Q₂* is turned on.

Additionally or alternatively, the blanking signal *308* may further cover a given follow-up time of the non-zero secondary current *307, I_{SEC}* period. This means that also a delay could be added to the end of the blanking pulse (after *I_{SEC}* = *0*)

The control circuit *103* is thus configured to drive the switches *104, Q₁; 105, Q₂* in turns in accordance with a dead time *t_{dead}* for the commutation of the switches *104, Q₁*; *105, Q₂*, and a hysteretic control of the primary current *304, I_{HB}* between the positive peak value *305, I_{MAGpos}* and the negative peak value *306, I_{MAGneg}.* The hysteretic control is inhibited by the blanking signal *308.*

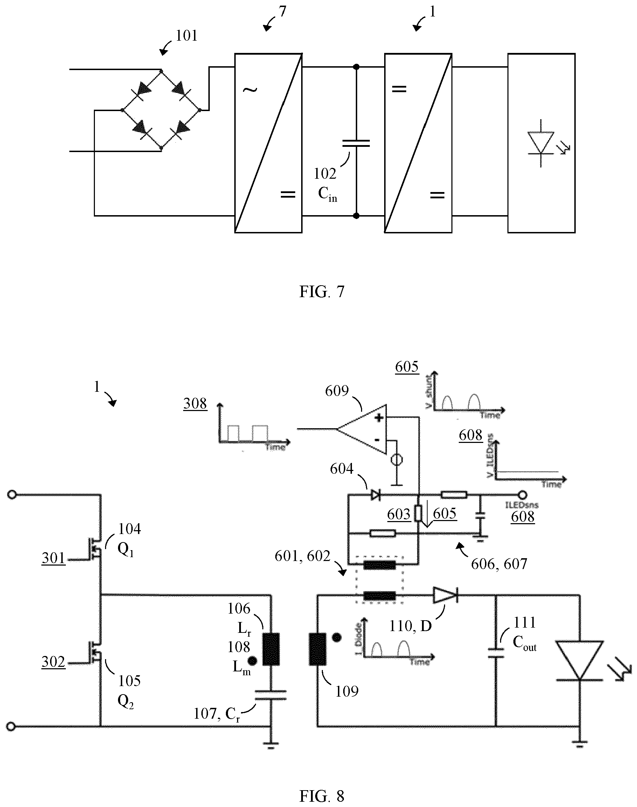

It will be appreciated that there are multiple options to derive the blanking signal *308.* These options will be explained in connection with FIG. 8 below.

FIG. 7 illustrates an exemplary LED driver including a resonant hybrid flyback converter *1* in accordance with the present disclosure.

In the depicted implementation, the converter *1* serves as a DC/DC stage.

In accordance with statutory provisions, the LED driver may further require a power factor correction (PFC) circuit 7 serving as an AC/DC stage between the input rectifying circuit *101* and the input capacitor *102*, especially for output powers of 25W and more.

FIG. 8 illustrates a circuit topology of the resonant hybrid flyback converter *1* in accordance with the present disclosure shown in FIG. 7.

The circuit topology of FIG. 8 includes a specific second sensing circuit, configured to sense a secondary current *307, I_{SEC}* through the rectifying circuit *110, D* and the secondary winding *109.*

Said second sensing circuit may comprise a current transformer *601, 602,* a second ohmic resistor *603, Rₛₕᵤₙₜ* and a diode *604.* A primary winding *601* of the current transformer *601, 602* may be interposed in the third circuit loop; a secondary winding *602* of the current transformer *601, 602,* the second ohmic resistor *603, Rₛₕᵤₙₜ* and the diode *604* may form a fourth circuit loop; and a voltage *605, Vₛₕᵤₙₜ* across the second ohmic resistor *603, Rₛₕᵤₙₜ* may be indicative of an instantaneous value of the secondary current *307, I_{SEC}.*

The second sensing circuit may further comprise a first-order resistor-capacitor, RC, filter *606, 607*; and a voltage *608, V_{ILEDsns}* across the capacitor *607* of the RC filter *606, 607* may be indicative of the average of the secondary current *307, I_{SEC}.*

Regarding the blanking signal *308,* the control circuit *103* may further comprise an op-amp comparator *609,* configured to derive the blanking signal *308* in accordance with the voltage *605, Vₛₕᵤₙₜ* across the second ohmic resistor *603, Rₛₕᵤₙₜ* applicable at a non-inverting input of the comparator *609* and a given threshold voltage applicable at an inverting input of the comparator *609.*

So whenever the instantaneous value of the secondary current *307, I_{SEC}* exceeds the given threshold voltage (e.g., 0V) the blanking signal *308* is raised to a logic 'high' (i.e., blanking, inhibition) level.

Alternatively, the conducting time of the rectifying circuit *110, D* can be calculated on an analytic / theoretical basis because the current follows a sine wave with its period defined by the resonant frequency of the leakage inductance *Lᵣ* and the resonant capacitor *Cᵣ.*

As such, the control circuit *103* may further be configured to derive the blanking signal *308* analytically in accordance with a resonant frequency of the resonant capacitor *107, Cᵣ* and of a leakage inductance *106, Lᵣ* of the primary winding *106, Lᵣ; 108, Lₘ.*

FIGs. 8-10 illustrate typical waveforms of the converter *1* in accordance with the present disclosure at different at different operating points.

In the typical waveforms shown, the secondary current flows for most of the on-time of the low-side switch, but this is not the case at every operating point. Accordingly, the blanking signal *308* facilitates hysteretic control of the converter *1* under various load conditions.

FIG. 8 shows a high current / high voltage example (1900mA/39,5V) which benefits from the blanking signal *308.*

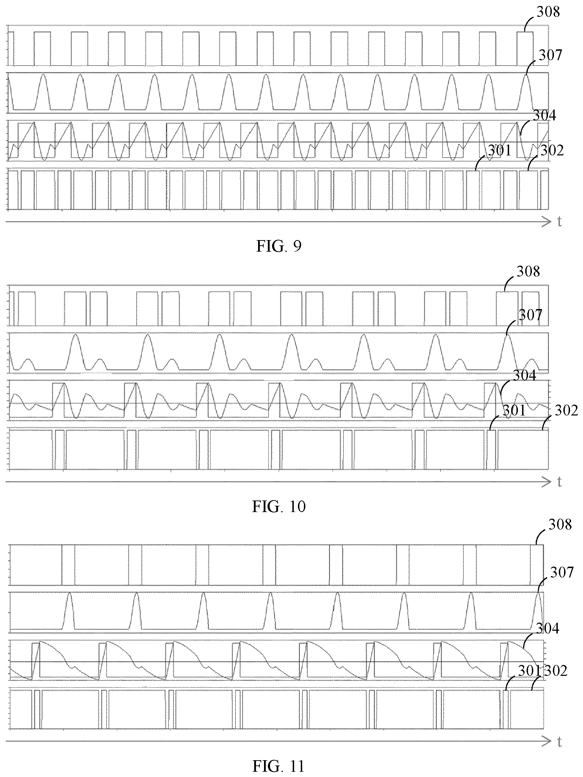

FIG. 9 shows a high current / low voltage example (1900mA/15V) which also benefits from the blanking signal *308.*

FIG. 10 shows a low current / low voltage example (100mA/15V) which does not benefit from the blanking signal *308.* However, the blanking signal *308* does not harm either.

The present disclosure has been described in conjunction with various implementations as examples. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. A resonant hybrid flyback converter (1), comprising
- an input capacitor (102, Cm), a resonant capacitor (107, Cᵣ) and an output capacitor (111, Cₒᵤₜ);
- a high-side, HS, switch (104, Q₁) and a low-side, LS, switch (105, Q₂);
- a transformer, comprising a primary winding (106, Lᵣ; 108, Lₘ) and a secondary winding (109); and
- a rectifiying circuit (110, D);
the input capacitor (102, Cᵢₙ), the HS switch (104, Q₁) and the LS switch (105, Q₂) forming a first circuit loop;
the LS switch (105, Q₂), the primary winding (106, Lᵣ; 108, Lₘ) and the resonant capacitor (107, Cᵣ) forming a second circuit loop; and
the rectifiying circuit (110, D), the secondary winding (109) and the output capacitor (111, Cₒᵤₜ) forming a third circuit loop;
the converter (1) further comprising
- a first sensing circuit, configured to sense a primary current (304, I_{HB}) through the primary winding (106, Lᵣ; 108, Lₘ) and the resonant capacitor (107, Cᵣ);
- a second sensing circuit, configured to sense a secondary current (307, I_{SEC}) through the rectifiying circuit (110, D) and the secondary winding (109); and
- a control circuit (103), configured to
- determine a positive peak value (305, I_{MAGpos}) for the primary current (304, I_{HB}) in accordance with a closed-loop control of an average of the secondary current (307, I_{SEC}) and a setpoint value (I_{SECref}) for said average;
- determine a negative peak value (306, I_{MaGneg}) for the primary current (304, I_{HB}) in accordance with a current-limited and voltage-limited commutation of the switches (104, Q₁; 105, Q₂);
- derive a blanking signal (308) that temporally covers a non-zero secondary current (307, I_{SEC}) period; and
- drive the switches (104, Q₁; 105, Q₂) in turns in accordance with
- a dead time (t_{dead}) for the commutation of the switches (104, Q₁; 105, Q₂), and
- a hysteretic control of the primary current (304, I_{HB}) between the positive peak value (305, I_{MAGpos}) and the negative peak value (306, I_{MaGneg}), the hysteretic control being inhibited by the blanking signal (308).

2. The converter (1) of claim 1,
the first sensing circuit comprising a first ohmic resistor interposed in the second circuit loop and configured to provide a voltage being indicative of the primary current (304, I_{HB}) through the primary winding (106, Lᵣ; 108, Lₘ) and the resonant capacitor (107, Cᵣ).

3. The converter (1) of claim 1 or claim 2,
the second sensing circuit comprising a current transformer (601, 602), a second ohmic resistor (603, Rₛₕᵤₙₜ) and a diode (604);
a primary winding (601) of the current transformer (601, 602) being interposed in the third circuit loop;
a secondary winding (602) of the current transformer (601, 602), the second ohmic resistor (603, Rₛₕᵤₙₜ) and the diode (604) forming a fourth circuit loop; and
a voltage (605, Vₛₕᵤₙₜ) across the second ohmic resistor (603, Rₛₕᵤₙₜ) being indicative of an instantaneous value of the secondary current (307, I_{SEC}).

4. The converter (1) of claim 3,
the second sensing circuit further comprising a first-order resistor-capacitor, RC, filter (606, 607); and
a voltage (608, V_{ILEDsns}) across the capacitor (607) of the RC filter (606, 607) being indicative of the average of the secondary current (307, I_{SEC}).

5. The converter (1) of claim 3 or claim 4,
the control circuit (103) further comprising an op-amp comparator (609), configured to derive the blanking signal (308) in accordance with the voltage (605, Vₛₕᵤₙₜ) across the second ohmic resistor (603, Rₛₕᵤₙₜ) applicable at a non-inverting input of the comparator (609) and a given threshold voltage applicable at an inverting input of the comparator (609).

6. The converter (1) of any one of the claims 1 to 4,
the control circuit (103) further configured to derive the blanking signal (308) analytically in accordance with a resonant frequency of the resonant capacitor (107, Cᵣ) and of a leakage inductance (106, Lᵣ) of the primary winding (106, Lᵣ; 108, Lₘ).

7. The converter (1) of any one of the preceding claims,
the blanking signal (308) further covering a given lead time of the non-zero secondary current (307, I_{SEC}) period.

8. The converter (1) of claim 1,
the blanking signal (308) further covering a given follow-up time of the non-zero secondary current (307, I_{SEC}) period.

9. The converter (1) of claim 1,
the non-zero secondary current (307, I_{SEC}) comprising a positive current flow towards a load of the converter (1).

10. A driver for at least one LED, comprising
a resonant hybrid flyback converter (1) of any one of the preceding claims.

11. The driver of claim 10, further comprising
a power factor correction, PFC, circuit (7), configured to perform AC/DC conversion and PFC.
